(19) **Europäisches Patentamt**

**European Patent Office**

**Office européen des brevets**

(11) **EP 0 923 078 A1**

(12) **EUROPEAN PATENT APPLICATION**

(43) Date of publication:
**16.06.1999 Bulletin 1999/24**

(21) Application number: **98103399.6**

(22) Date of filing: **26.02.1998**

(51) Int. Cl.⁶: **G11B 21/08**, G11B 5/55,
G11B 11/10, G11B 21/10,
G11B 5/584

(84) Designated Contracting States:
**AT BE CH DE DK ES FI FR GB GR IE IT LI LU MC NL PT SE**
Designated Extension States:
**AL LT LV MK RO SI**

(30) Priority: **12.12.1997 US 990149**

(71) Applicant: **TANDBERG DATA ASA**
**0411 Oslo (NO)**

(72) Inventor: **Raastad, Jorn**
**0690 Oslo (NO)**

(74) Representative:
**Tönhardt, Marion, Dr. et al**
**Forrester & Boehmert,**
**Franz-Joseph-Strasse 38**
**80801 München (DE)**

(54) **Servo pattern for linear recording servo tracking tape drives and a system and method for sensing position using same**

(57) A high track density tape drive uses position feedback based on patterns (1) written onto a tape (10), known as servo patterns, for tracking control. The servo pattern uses two or more different frequencies (12,14), and the amplitude ratio between these frequencies is determined. Or, the servo pattern uses two or more phases (22,24), and the position is determined based on the amount of each signal. The pattern provides position feedback at low cost, low drop out sensitivity with simple detection and a simplified system design.

*FIG. 1*

Printed by Xerox (UK) Business Services
2.16.7/3.6

## Description

### BACKGROUND OF THE INVENTION

The present invention generally relates to a servo pattern for linear recording servo tracking tape drives for storage of digital or analog data or other devices that use magnetic or magneto-optical recording for storage and/or retrieval of data. The present invention provides a system and a method that sense the position of read/write elements of a magnetic head relative to the media. Primarily, the system and method sense position of a head relative to a tape in a direction perpendicular to the primary movement direction of the media and linear recording tape drives. The sensed position is used as feedback in a control system to accurately position the head relative to the media to increase track densities compared to systems having no such sensing of position.

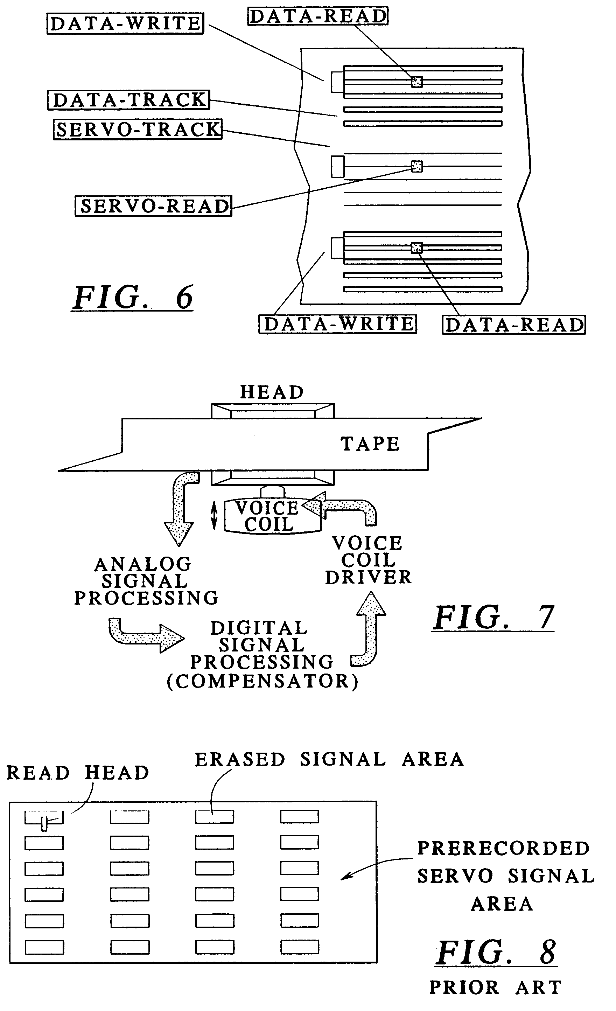

It is, of course, generally known that in linear recording, tracks are written along a length of the tape in a side-by-side manner as generally shown in Figure 6. A head is stationary as opposed to rotating, and the tape moves across the front of the head. Such a construction is generally shown in Figure 7. The tape is guided to avoid movement perpendicular to the primary movement direction of the tape, that is, tape movement transverse to the direction of the tape is attempted to be avoided. However, for various reasons, some transversal tape movement generally always occurs. Such movement is a limiting factor in increasing density of track layouts in tape drives. Therefore, minimizing transversal vibration or the effect of the same is essential to increase the track density of linear recording tape drives. One way to minimize the effect of the transversal tape movement is to sense the position of the head in use of a feedback control system or a more simple calibration system that moves the head in a same direction as the tape.

Position sensing of a head relative to a media is currently available in tape drives, disc drives, and other storage devices to position a read head and/or a write head relative to the media. Different magnetic patterns on the media exist to sense the position of the head. Many patterns are based upon the principle of sensing more or less of a signal based on the amount of head that is covered by the pattern. These patterns are typically based on a recorded signal and erased media. Such a pattern is generally illustrated in Figure 8. An output signal of a head in a system based on a partly erased or not written signal is generally shown by Figure 9. The frequency analysis of the signal shown in Figure 9 is shown in Figure 10 wherein a broad band spectrum as a carrier frequency is modulated with a square wave signal. The amount of the head that covers the recorded signal determines the position of the head. Usually, this is combined with a calibration scheme which determines the full amplitude of the recorded signal.

A need exists for an improved servo pattern on a tape used for linear recording servo tracking tape drives and a system and method that implements the same.

### SUMMARY OF THE INVENTION

The present invention provides a servo pattern for linear recording servo tracking tape drives. In addition, the present invention provides a system and a method for implementing such a pattern for linear recording servo tracking tape drives.

To this end, the present invention provides a system for sensing position in a tape drive. The system has a tape having a length and a plurality of tracks forming a pattern written along the length of the tape wherein the tracks are substantially parallel and written in side-by-side fashion and further wherein adjacent tracks have different signals. A head is constructed and arranged to follow at least one of the tracks of the tape.

In an embodiment, adjacent tracks have different frequency signals.

In an embodiment, adjacent tracks have different phase signals.

In an embodiment, adjacent tracks have different frequency signals and phase signals.

In an embodiment, more than two different frequency signals form the pattern.

In an embodiment, the different signals in the pattern are fixed frequencies.

In another embodiment of the present invention, a method for sensing position in a tape drive is provided. The method comprises the steps of: providing a tape having a length and a plurality of tracks forming a pattern written along the length of the tape wherein the tracks are substantially parallel and written in side-by-side fashion and further wherein adjacent tracks have different signals; positioning a head of the tape drive adjacent the tape; and sensing position of the head based on the signals provided on the tape.

In an embodiment, adjacent tracks are provided in the pattern of tracks on the tape with different frequency signals.

In an embodiment, adjacent tracks are provided in the pattern of tracks on the tape with different phase signals.

In an embodiment, adjacent tracks are provided in the pattern of tracks on the tape with different frequency signals and phase signals.

In an embodiment, amplitudes of each of the signals are determined. A ratio between the amplitudes is determined and position of the head is calculated based on the ratio.

In an embodiment, more than two frequencies are provided in adjacent tracks in the pattern of tracks on the tape.

In another embodiment of the present invention, a tape is provided. The tape has a plurality of tracks written side-by-side along a length of magnetic material wherein at least one of the tracks is a servo track. At least two different signals are provided on adjacent tracks.

In an embodiment, the different signals have different frequencies.

In an embodiment, the different signals have different phases.

In an embodiment, the different signals have different frequency and phase.

In an embodiment, the different signals have more than two different frequencies.

In an embodiment, the servo track forms a pattern of adjacent tracks formed of different signals, either of different frequencies and/or different phases.

It is, therefore, an advantage of the present invention to provide a tape with a pattern and a system and method that implements the same that provides position feedback.

Another advantage of the present invention is to provide a tape with a pattern and a system and method that implements the same that provides position feedback at low cost.

Yet another advantage of the present invention is that to provide a tape with a pattern and a system and method that implements the same that provides low drop out sensitivity with simple detection and a simplified system design.

Additional features and advantages of the present invention are described in, and will be apparent from, the detailed description of the presently preferred embodiments and from the drawings.

## BRIEF DESCRIPTION OF THE DRAWINGS

Figure 1 illustrates an embodiment of a pattern written on a tape with two different frequency signals.
Figure 2 illustrates a graph of an output of a head while reading a pattern such as that illustrated in Figure 1.
Figure 3 illustrates a graph of a frequency spectrum of the signal output of the head illustrated in Figures 1 and 2.
Figure 4 illustrates an embodiment of a pattern written on a tape with two different phase signals.
Figure 5 illustrates an embodiment of a tape positioned next to a head wherein the head has gap lines for writing the full width of the tape and the different frequencies or phases.
Figure 6 illustrates an embodiment of conventional positioning of read and write elements based on position information from a servo track.
Figure 7 illustrates an embodiment of a feedback control system showing relative position of a head and a tape.

Figure 8 illustrates an embodiment of a conventional servo pattern with erased signal areas on a tape.
Figure 9 illustrates a graph of an output signal of a head in a system implementing the conventional servo pattern of Figure 8.
Figure 10 illustrates a graph of a frequency spectrum of the signal of Figure 9 showing a broad band spectrum as a carrier frequency modulated with a square wave signal.

## DETAILED DESCRIPTION OF THE PRESENTLY PREFERRED EMBODIMENTS

The present invention provides a pattern implemented for position sensing with linear recording servo tracking tape drives. The pattern is designed such that instead of sensing signal and erased media, a head senses two different signals with a different frequency and/or phase.

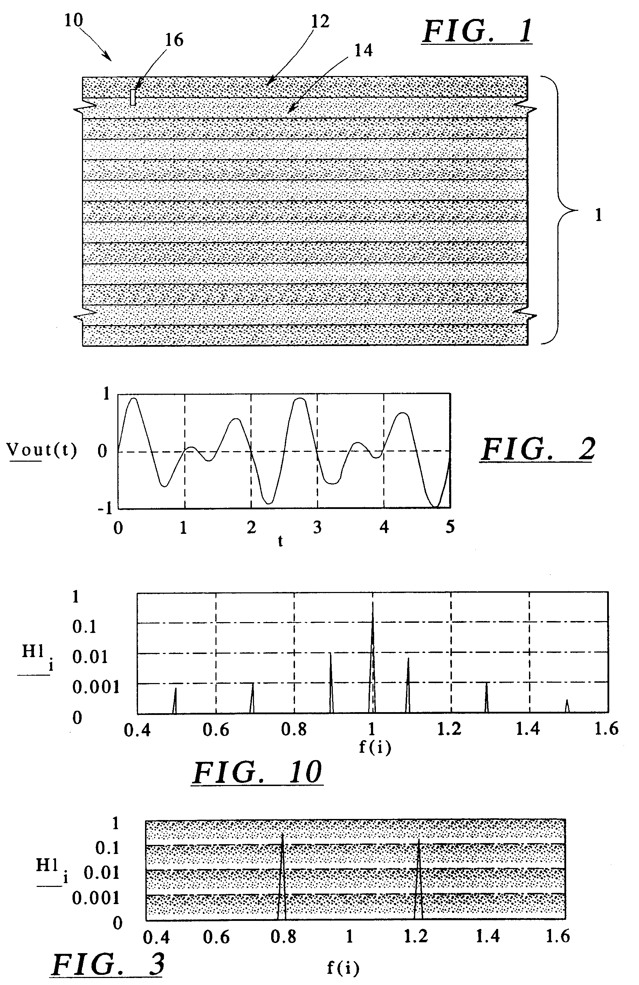

To this end, as shown in Figure 1, a tape 10 is provided having a pattern 1. The pattern 1 will typically not cover the full width of the tape, but may do so. The pattern 1 is formed by two different parts 12,14. The parts 12,14 differ in frequency, f1 and f2, respectively. The first part 12 has the frequency f1, and the second part 14 has the frequency f2. An output of a head 16, therefore, contains both frequencies, Vout(t) as generally shown in Figure 2. Signal processing may then be applied to separate the frequencies and to determine the amplitude of each frequency wherein the amplitude of each frequency, f1 and f2, is represented by "a" and "b", respectively, in the equations below. The frequency spectrum of the signal output of the head 16 is shown in Figure 3. The frequency modulation is small. When the amplitudes are established, the ratio between the amplitudes can be determined, and the position X of the head 16 can be calculated as follows:

$$Vout(t) := a \cdot \sin(2 \cdot \pi \cdot f1 \cdot t) + b \cdot \sin(2 \cdot \pi \cdot f2 \cdot t) \quad (1)$$

$$X := \frac{b}{a+b} \quad (2)$$

Signal processing to determine the amount of each frequency can be implemented in a number of ways. A first method samples a signal from the head 16 at a frequency more than two times higher than the highest frequency content of the signal. The Fourier transform can then be calculated. From this calculation, the amplitude of each frequency can be determined. The position of the head 16 can then further be determined by the amount of each frequency in the signal as set forth by equation (1) above.

A second method to determine the amount of each frequency is, if the two frequencies are sufficiently separated in the frequency domain, each frequency can then be filtered out and demodulated separately, either with analog circuitry or with digital signal processing techniques. Thereafter, the position of the head 16 can then be determined by the equations (1) and (2) as set forth above.

In addition, the pattern can be extended to include more than two frequencies. When more than two frequencies are used, the signal can be decoded to determine which track is sensed. In this manner, not only is the transversal position of the head 16 relative to a single track sensed, but also which track is currently tracked in the case of a multi-track system can also be determined. As track densities increase, this allows a determination to be made of the track number. As a result, the sampling frequency is not determined by the pattern, and, therefore, sampling frequency can be chosen by a designer of a control system. In addition, the pattern uses fixed frequencies and is, therefore, easy to handle in a sampled system, i.e. narrow spectrum: Further, a signal is always present which simplifies hardware design of the detector chip. Still further, the pattern decreases the drop out sensitivity significantly by the way the signal is demodulated, i.e., in the presence of a drop out, amplitudes of both frequencies decrease, but the ratio between them remains nearly the same. The residual error can be calculated using well-known models for spacing loss. Furthermore, low frequency carrier signals can be used without loss of accuracy in the system by decreasing drop out sensitivity caused by space and loss. Finally, the pattern described is easy to write onto the tape.

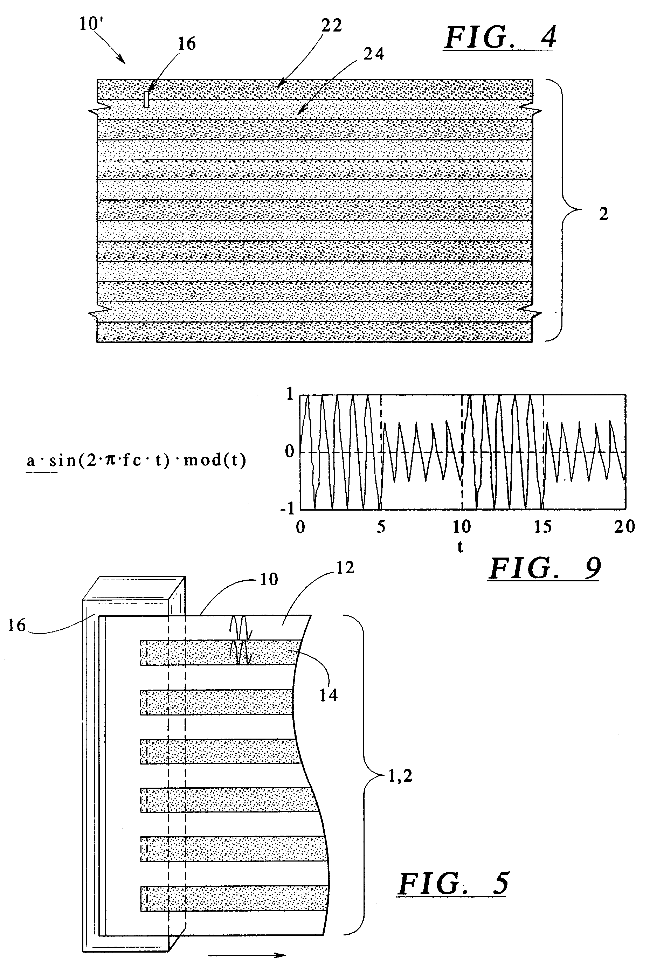

As shown in Figure 4, a tape 10' is provided having a pattern 2 with a signal 22 having a first phase and a signal 24 having a second phase which can be written such that the signals 22,24 differ in phase. As an output of the head 16 is the sum of the two input signals 22,24, two sinusoids that differ in phase can be used to sense position of the head 16. As an example, if the two parts of the patterns differ in phase by 180°, then the output of the head 16 is 100 percent when the head 16 is placed over only phase 1 or phase 2, and the output is zero percent when the head 16 is placed ideally in the middle of the track and an equal amount of each sinusoid is sensed by the head 16. Therefore, the position is proportional to the output of the head 16.

The phase pattern 2 also has many benefits as the pattern 1 written with different frequencies as described previously. One advantage is that the sampling frequency is not determined by the pattern 2, and, therefore, the sampling frequency can be chosen by the control system designer. Further, the pattern 2 uses fixed frequencies and is, therefore, easy to handle in a sampled system, i.e. a narrow spectrum. Further, low frequency carrier signals can be used without loss of accuracy in the system which thereby decreases drop out sensitivity caused by spacing loss. Finally, the pattern 2 is relatively easy to write on the tape.

To this end, the patterns 1 or 2 of Figures 1 or 4, respectively, can be written on the tape 10 or 10' using a simple head 16 with two gap lines as shown in Figure 5. The head 16 consists of two gap lines wherein the first gap line writes the full width of the servo band and the second gap line writes the actual track at a different frequency and/or phase. Typically, the head 16 consists of two separate magnetic circuits, one for each gap line. However, for the writing patterns that differ in phase, the two gap lines may, in principle, be the same magnetic circuit if the gap line distance and frequency are adjusted properly. If more than two frequencies or phase differences are used, the head 16 may be extended to more than two gap lines/magnetic circuits.

It should be understood that various changes and modifications to the presently preferred embodiments described herein will be apparent to those skilled in the art. Such changes and modifications may be made without departing from the spirit and scope of the present invention and without diminishing its attendant advantages. It is, therefore, intended that such changes and modifications be covered by the appended claims.

The features disclosed in the foregoing description, in the claims and/or in the accompanying drawings may, both separately and in any combination thereof, be material for realising the invention in diverse forms thereof.

**Claims**

1. A system for sensing position in a tape drive, the system comprising:

   a tape having a length and a plurality of tracks forming a pattern written along the length of the tape wherein the tracks are substantially parallel and written in side-by-side fashion and further wherein adjacent tracks have different signals; and
   a head constructed and arranged to follow at least one of the tracks of the tape.

2. The system of Claim 1 wherein adjacent tracks have different frequency signals.

3. The system of Claim 1 wherein adjacent tracks have different phase signals.

4. The system of Claim 1 wherein adjacent tracks have different frequency signals and phase signals.

5. The system of Claim 1 wherein more than two different frequency signals form the pattern.

6. The system of Claim 1 wherein the different signals in the pattern are fixed frequencies.

7. A method for sensing position in a tape drive, the method comprising the steps of:

providing a tape having a length and a plurality of tracks forming a pattern written along the length of the tape wherein the tracks are substantially parallel and written in side-by-side fashion and further wherein adjacent tracks have different signals;

positioning a head of the tape drive adjacent the tape; and

sensing position of the head based on the signals provided on the tape.

8. The method of Claim 7 further comprising the step of:

providing adjacent tracks in the pattern of tracks on the tape with different frequency signals.

9. The method of Claim 7 further comprising the step of:

providing adjacent tracks in the pattern of tracks on the tape with different phase signals.

10. The method of Claim 7 further comprising the step of:

providing adjacent tracks in the pattern of tracks on the tape with different frequency signals and phase signals.

11. The method of Claim 7 further comprising the step of:

determining amplitudes of each of the signals;
determining a ratio between the amplitudes; and
calculating position of the head based on the ratio.

12. The method of Claim 7 further comprising the step of:

providing more than two frequencies in adjacent tracks in the pattern of tracks on the tape.

13. A tape comprising:

a plurality of tracks written side-by-side along a length of magnetic material wherein at least one of the tracks is a servo track; and
at least two different signals provided on adjacent tracks.

14. The tape of Claim 13 wherein the different signals have different frequencies.

15. The tape of Claim 13 wherein the different signals have different phases.

16. The tape of Claim 13 wherein the different signals have different frequency and phase.

17. The tape of Claim 13 wherein the different signals have more than two different frequencies.

18. The tape of Claim 13 wherein the servo track forms a pattern of adjacent tracks formed of different signals.

19. The tape of Claim 18 wherein the different signals in the pattern of adjacent tracks have different frequencies.

20. The tape of Claim 18 wherein the different signals in the pattern of adjacent tracks have different phases.

*FIG. 1*

*FIG. 2*

*FIG. 10*

*FIG. 3*

10'
16
22
24

*FIG. 4*

2

$$\underline{a \cdot \sin(2 \cdot \pi \cdot f c \cdot t) \cdot \mathrm{mod}(t)}$$

*FIG. 9*

16

10
12
14

1,2

*FIG. 5*

DATA-WRITE    DATA-READ

DATA-TRACK

SERVO-TRACK

SERVO-READ

*FIG. 6*

DATA-WRITE    DATA-READ

HEAD

TAPE

VOICE
COIL

VOICE
COIL
DRIVER

ANALOG
SIGNAL
PROCESSING

DIGITAL
SIGNAL
PROCESSING
(COMPENSATOR)

*FIG. 7*

READ HEAD    ERASED SIGNAL AREA

PRERECORDED
SERVO SIGNAL
AREA

*FIG. 8*

PRIOR ART

8

European Patent
Office

**EUROPEAN SEARCH REPORT**

Application Number

EP 98 10 3399

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 996 609 A (JOANNOU KYRIACOS) 26 February 1991 <br><br> * column 6, line 9 - column 8, line 14; figures 5,7,8 * <br> --- | 1-3,6-9, 11, 13-15, 18-20 | G11B21/08 <br> G11B5/55 <br> G11B11/10 <br> G11B21/10 <br> G11B5/584 |
| X | US 5 291 348 A (COPOLILLO CLEMENT R) 1 March 1994 <br> * column 2, line 45 - column 7, line 61; claim 11 * <br> --- | 1,2,7,8, 13,14,18 | |
| X | US 4 318 141 A (HAYNES MUNRO K) 2 March 1982 <br><br> * column 3, line 45 - column 8, line 36; figures 3-6 * <br> --- | 1,2,4,7, 8,10,11, 13,14, 16,18,19 | |
| A <br><br> X | US 5 262 908 A (IWAMATSU TADASHI ET AL) 16 November 1993 <br> * column 6, line 44 - column 10, line 29; figures 2A,2B,3 * <br> --- | 1,2,5,7, 8,11,12 13,14, 17-19 | TECHNICAL FIELDS SEARCHED (Int.Cl.6) <br><br> G11B |
| A | US 4 901 297 A (KOMATSU KEIICHI ET AL) 13 February 1990 <br><br> * column 11, line 20 - column 14, line 9 * <br> * column 25, line 64 - column 27, line 17; figures 9-12,36-38 * <br> --- | 1-4, 6-11, 13-16, 18,20 | |
| A | US 3 696 346 A (ZOOK JAMES DAVID) 3 October 1972 <br> * column 2, line 38 - column 3, line 16; figures 1A,2 * <br> --- | 1 | |

-/--

The present search report has been drawn up for all claims

| Place of search | Date of completion of the search | Examiner |
|---|---|---|
| THE HAGUE | 25 September 1998 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 98 10 3399

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | C. HANDEN ET AL.: "Improvement in the position error signal detector channel for a "buried servo" recording system " IBM TECHNICAL DISCLOSURE BULLETIN, vol. 23, no. 3, August 1980, pages 1203-1210, XP002078774 ARMONK, N.Y., US * the whole document * | | |

TECHNICAL FIELDS SEARCHED (Int.Cl.6)

The present search report has been drawn up for all claims

| Place of search | Date of completion of the search | Examiner |
|---|---|---|
| THE HAGUE | 25 September 1998 | Fux, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)